(19) Europäisches Patentamt
European Patent Office
Office européen des brevets

(11) **EP 2 659 748 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(51) Int Cl.:
***H05H 1/34*** *(2006.01)*      ***F23D 11/44*** *(2006.01)*

(21) Anmeldenummer: **11808560.4**

(86) Internationale Anmeldenummer:
**PCT/AT2011/000509**

(22) Anmeldetag: **22.12.2011**

(87) Internationale Veröffentlichungsnummer:
**WO 2012/088552 (05.07.2012 Gazette 2012/27)**

(54) **HEIZELEMENT, WASSERDAMPF-SCHNEIDGERÄT UND BRENNER EINER STROMERZEUGUNGSVORRICHTUNG**

HEATING ELEMENT, STEAM CUTTING DEVICE, AND BURNER OF A POWER-GENERATING DEVICE

ÉLÉMENT CHAUFFANT, APPAREIL DE COUPE À VAPEUR D'EAU ET BRÛLEUR D'UN DISPOSITIF DE PRODUCTION DE COURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010 AT 21572010**

(43) Veröffentlichungstag der Anmeldung:
**06.11.2013 Patentblatt 2013/45**

(73) Patentinhaber: **Fronius International GmbH**
**4643 Pettenbach (AT)**

(72) Erfinder:
• **STÖGER, Max**
**A-4655 Vorchdorf (AT)**
• **MAGERL, Christian**
**A-3921 Langschlag (AT)**
• **LEEB, Josef**
**A-4643 Pettenbach (AT)**
• **RESCH, Christian**
**94099 Ruhstorf (DE)**
• **PLATZER, Daniel**
**4600 Wels (AT)**

(74) Vertreter: **Sonn & Partner Patentanwälte**
**Riemergasse 14**
**1010 Wien (AT)**

(56) Entgegenhaltungen:
**WO-A1-93/08668          WO-A2-2010/078606**
**US-A1- 2006 219 709      US-A1- 2009 230 096**

**Beschreibung**

Die Erfindung betrifft ein Heizelement für zu verdampfende Flüssigkeiten, beispielsweise für einen Brenner eines Wasserdampf-Schneidgeräts oder einem Brenner einer Stromerzeugungsvorrichtung, welches als Induktionsheizung mit einer Spule ausgebildet ist.

Weiters betrifft die Erfindung ein Wasserdampf-Schneidgerät mit einem solchen Heizelement und einem Brenner einer Stromerzeugungsvorrichtung einer Ladevorrichtung mit einem solchen Heizelement.

Aus der EP 1 050 200 B1 ist ein Wasserdampf-Schneidgerät bekannt, welches aus einem Brenner, einer Steuervorrichtung, einem Flüssigkeitsversorgungssystem und einer Stromquelle besteht. Der Brenner ist über Leitungen mit der Stromquelle und über eine Versorgungsleitung mit dem Flüssigkeitsversorgungssystem verbunden. Im Brenner ist zumindest ein Kanal bzw. Strömungskanal mit einem vorgegebenen Querschnitt angeordnet, in dem die Flüssigkeit in einen gasförmigen Zustand umgewandelt wird. Weiters umfasst der Brenner zumindest eine Kathode und eine Anode, wobei die Flüssigkeitsversorgung über eine Leitung mit einem Zwischenraum zwischen der Kathode und der Anode verbunden ist. Im Brenner ist ein Heizelement enthalten, wobei eine Länge des Kanals bzw. Strömungskanals bzw. eine Oberfläche desselben so bemessen ist, dass bei einer vorbestimmbaren Wärmezufuhr durch das Heizelement eine zum vollständigen Verdampfen der zugeführten Flüssigkeit benötigte Wärmeenergie zuführbar ist, wobei das Heizelement durch ein Widerstandsheizelement, Heizpatronen oder einen Strahlheizkörper gebildet ist.

Nachteilig bei der Verwendung eines Widerstandsheizelements ist, dass durch eine ohmsche Beheizung die Energiedichte begrenzt ist, da eine Menge an Wärmeübergangswiderständen vorhanden sind. Zum einen ist ein Wärmeübergangswiderstand zwischen dem Heizelement bzw. Heizwiderstand und Isoliermaterial vorhanden. Dazu kommt ein Wärmeübergangswiderstand durch die Wärmeleitung im Isoliermaterial und einer zwischen Isoliermaterial und Verdampfer, welcher je nach Art der Montage und des Anpressdrucks stark variiert. Durch die Summe dieser Widerstände liegt die Betriebstemperatur des Heizelements bzw. des Heizwiderstands bei Volllast meist mehrere 100 Kelvin über der des Verdampfers. Diese dort auftretenden Temperaturen können den Heizwiderstand zerstören. Abhilfe würde nur eine Verringerung der Energiedichte und dadurch Vergrößerung der Heizfläche bringen.

Aus der AT 502 448 B1 ist ein Aufbau eines Wasserdampfplasmabrenners bekannt.

Eine Stromerzeugungsvorrichtung für tragbare Ladegeräte ist beispielsweise aus der US 7,180,264 B2 bekannt. Von der Stromerzeugungsvorrichtung wird der Ladestrom für die Batterien erzeugt, wobei die Stromerzeugungsvorrichtung einen Tank mit Treibstoff, einen Brenner, ein Thermoelement und eine Steuervorrichtung beinhaltet. Das Thermoelement erzeugt aufgrund seiner physikalischen Eigenschaften eine elektrische Spannung bzw. elektrische Energie, wenn es an einen Verbraucher angeschlossen wird und somit ein elektrischer Strom fließt. Voraussetzung für das Auftreten der thermoelektrischen Spannung ist ein gewisser Temperaturunterschied zwischen den beiden Seiten des Thermoelements. Zu diesem Zweck wird eine Seite des Thermoelements mit Hilfe des Brenners, welcher den Treibstoff aus dem Tank verbrennt, erhitzt, wohingegen die andere Seite des Thermoelements Umgebungstemperatur aufweist, so dass der für die thermoelektrische Spannung notwendige Temperaturunterschied gewährleistet ist. Mit dieser Methode können insbesondere Lithium-Ionen- und Lithium-Polymer-Batterien mit einer maximalen Kapazität von 0,5 Amperestunden (Ah) geladen werden. Eine Batterie bzw. ein Energiespeicher mit einer höheren Kapazität, beispielsweise von 30 Ah und darüber, wie dies bei einem Energiespeicher eines Fahrzeugs, insbesondere Kraftfahrzeugs, der Fall ist, kann demgegenüber nicht schonend und effektiv geladen werden. Auch ist mit dem verwendeten Brenner, einem sogenannten Schneckenbrenner, keine stabile Verbrennung möglich, so dass der zur effektiven Stromerzeugung erforderliche konstante Temperaturunterschied nicht erzielt werden kann.

Weiters ist aus der WO 2010/078606 A2 eine Ladevorrichtung zum Laden eines Energiespeichers mit einer Stromerzeugungsvorrichtung, einem Ladegerät und weiteren Komponenten bekannt. Die Stromerzeugungsvorrichtung wird durch eine Wärmequelle, welche zumindest einen mit einer Zuleitung für einen Brennstoff verbundenen Brenner umfasst, und ein Thermoelement, einen Brenner, eine Heizeinrichtung und eine Düse für eine solche Ladevorrichtung gebildet. Zur Schaffung einer konstant stabilen Verbrennung und Ermöglichung der Selbsterhaltung eines Verdampfungsprozesses sind die Stromerzeugungsvorrichtung, das Ladegerät und die weiteren Komponenten in einem gemeinsamen Gehäuse angeordnet. Im untersten Bereich des Gehäuses des Brenners ist ein Verdampfer für den zugeführten Brennstoff angeordnet. Eine Rückwand des Gehäuses wird als Element zur Ableitung der Wärme ausgebildet.

Induktiv wirkende Heizelemente der gegenständlichen Art sind der JP 2001230064 A, der JP 2001188428 A und der JP 2000039786 A zu entnehmen.

Die Aufgabe der vorliegenden Erfindung besteht in der Schaffung eines oben erwähnten Heizelements sowie Wasserdampf-Schneidgeräts und Brenners einer Stromerzeugungsvorrichtung, durch welche eine verbesserte Verdampfung der zugeführten Flüssigkeit erzielt werden kann.

Gelöst wird die Aufgabe der Erfindung durch ein oben genanntes Heizelement, wobei die Spule der Induktionsheizung in einer aus einem Grundkörper mit seitlich erstreckenden Stegen bestehenden Hybridkonstruktion mit einem leicht magnetisierbaren Material und einem thermisch hoch leitfähigen Material umschlossen ist, wobei auf den Stegen ein Abdeckelement aus nanokristallinen Materialien angeordnet ist, und das leicht magentisierbare Material zur Anlage an einem thermisch hoch leitfähigen Material eines Verdampfers ausgebildet ist.

Gelöst wird die Aufgabe der Erfindung auch durch ein oben genanntes Wasserdampf-Schneidgerät und einen Brenner einer Stromerzeugungsvorrichtung einer Ladevorrichtung mit einem solchen Heizelement.

Durch den Einsatz einer Induktionsheizung kann der Wärmeübergangswiderstand begrenzt bzw. verringert werden, da die Energie direkt im Metall entsteht und somit nur mehr die Wärmeleitung im Metall entscheidend ist. Dadurch entstehen viel geringere Temperaturgradienten und es können deutlich höhere Leistungsdichten bei der Wärmeübertragung erreicht werden. Ersetzt man ein bekanntes Widerstandsheizelement durch eine bekannte Induktionsheizung, wäre allerdings das Verhältnis der Blindleistung zur Scheinleistung nicht zufriedenstellend und es müsste ein hoher leistungselektronischer Aufwand betrieben werden, um die gewünschte Wirkleistung zu erreichen. Dies wird derart verbessert, dass der magnetische Kreis mit Hilfe von Magnetwerkstoffen, welche Temperaturen >200° C standhalten, insbesondere Magnetmaterialien mit nanokristallinen Strukturen und einer optimierten Geometrie, optimiert wurde. Dadurch verringert sich die Blindleistung und die benötigte Betriebsfrequenz wird signifikant reduziert.

Die Hybridkonstruktion der Induktionsheizung besteht aus einem Grundkörper mit seitlich erstreckenden Stegen, innerhalb welcher die Spule angeordnet ist und abschließend ein Abdeckelement angeordnet ist. Dadurch wird ein einfacher Aufbau geschaffen und ist gleichzeitig eine gute Positionierung der Spule für die Montage gegeben.

Durch die Verwendung einer Hybridkonstruktion des Verdampfers aus einem leicht magnetisierbaren Material und einem thermisch hoch leitfähigen Material können die Vorteile der geringen Eindringtiefe des Wirbelstromes bei Materialien mit hoher Permeabilität und somit hoher Energieeinbringung bei vergleichbar niederen Frequenzen mit der guten Wärmeleitfähigkeit kombiniert werden.

Vorteilhaft ist auch eine Ausbildung, bei der das leicht magnetisierbare Material aus Eisen oder ferritischem Edelstahl und das hoch thermisch leitfähige Material aus Kupfer, Aluminium oder Silber gebildet ist. Dadurch wird eine optimale Bindung des Magnetflusses im Material und somit ein schnelleres und sicheres Verdampfen einer vorbeigeförderten Flüssigkeit erreicht. Damit kann auch der Verdampfungskanal des Verdampfers verkürzt werden, wodurch die Baugröße des Brenners eines Wasserdampf-Schneidgeräts oder einer Stromerzeugungsvorrichtung wesentlich verkleinert werden kann. Dadurch wird die Handhabung bei einem Wasserdampf-Schneidgerät wesentlich verbessert.

Wenn das leicht magnetisierbare Material des Hybridaufbaus auf das thermisch hoch leitfähige Material des Verdampfers aufgepresst ist, kann ein sicherer und fester Sitz erreicht und gleichzeitig der Übergangswiderstand möglichst gering gehalten und somit die Heizverluste reduziert werden. Damit kann der Wirkungsgrad verbessert werden.

Vorteilhafterweise umschließt das leicht magnetisierbare Material die Spule allseitig bzw. an allen vier Seiten, wodurch eine noch bessere Führung des magnetischen Flusses erzielt wird.

Von Vorteil ist aber auch, wenn zum Ansteuern der Induktionsheizung eine im Current-mode betriebene Schaltung vorgesehen ist, da dadurch eine sichere Regelung der Heizung erzielt werden kann.

Vorteilhafterweise enthält die Schaltung Transistoren, wobei immer zwei Transistoren so lange eingeschaltet sind, bis ein gewisser Stromwert durch die Heizung erreicht ist. Dadurch wird ausreichend Energie an die Heizung zugeführt und somit eine optimale Heizleistung erzielt.

Die vorliegende Erfindung wird anhand der beiliegenden Zeichnungen erläutert. Darin zeigen:

Fig. 1 eine schematische Darstellung eines Wasserdampf-Schneidgeräts;

Fig. 2 eine schematische Darstellung des Aufbaus eines Brenners aus dem Stand der Technik mit einem Widerstands-Heizelement;

Fig. 3 eine schematische Darstellung des thermischen Aufbaus des Brenners nach Fig 2;

Fig. 4 eine schematische Darstellung des Aufbaus eines neuartigen Brenners mit einer Induktionsheizung;

Fig. 5 eine schematische Darstellung eines verbesserten thermischen Aufbaus des Brenners mit Induktionsheizung;

Fig. 6 eine schematische Darstellung des thermischen Aufbaus des Brenners nach Fig. 5; und

Fig. 7 eine schematische Darstellung eines Brenners einer Stromerzeugungsvorrichtung.

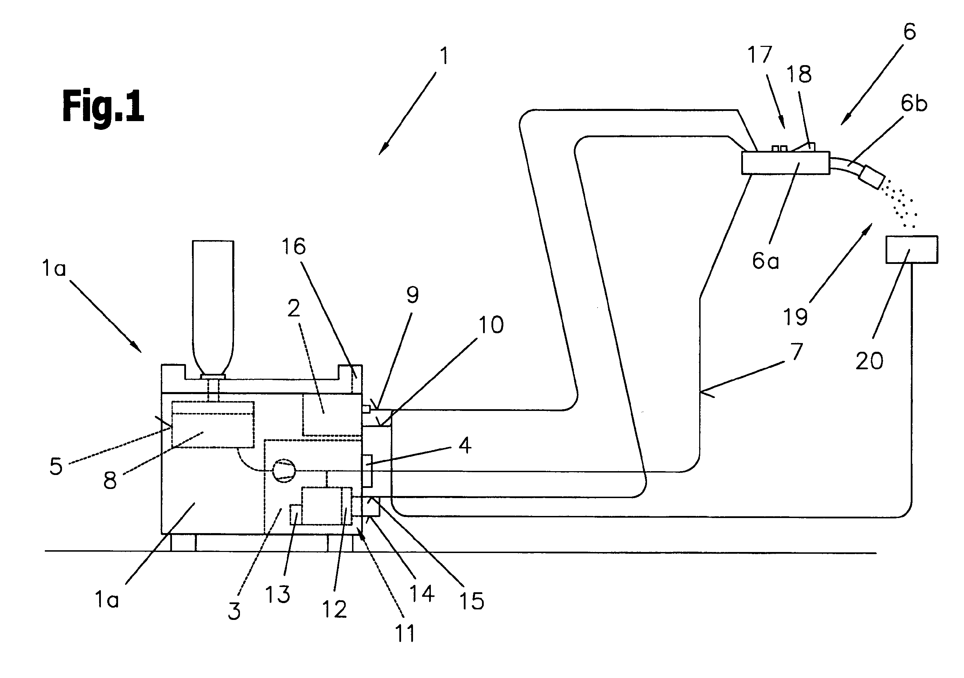

In Fig. 1 ist ein Wasserdampf-Schneidgerät 1 für ein Wasserdampf-Schneidverfahren gezeigt. Das Grundgerät 1a des Wasserdampf-Schneidgeräts 1 umfasst eine Stromquelle 2, eine Steuervorrichtung 3 und ein der Steuervorrichtung 3 zugeordnetes Sperrelement 4. Das Sperrelement 4 ist mit einem Behälter 5 und einem Wasserdampfplasmabrenner bzw. Brenner 6, der einen Brennergriff 6a und einen Brennerkörper 6b umfasst, über eine Versorgungsleitung 7 verbunden, so dass der Brenner 6 mit einer im Behälter 5 angeordneten Flüssigkeit 8 versorgt werden kann. Die Versorgung des Brenners 6 mit elektrischer Energie von der Stromquelle 2 erfolgt über die Leitungen 9, 10.

Zum Kühlen des Brenners 6 ist dieser über einen Kühlkreislauf 11 allenfalls unter Zwischenschaltung eines Strömungswächters 12 mit einem eigenen Flüssigkeitsbehälter 13 oder dem Behälter 5 verbunden. Bei der Inbetriebnahme des Brenners 6 bzw. des Grundgeräts 1a kann der Kühlkreislauf 11 von der Steuervorrichtung 3 gestartet und somit eine Kühlung des Brenners 6 über den Kühlkreislauf 11 erreicht werden. Zur Bildung des Kühlkreislaufs 11 wird der Wasserdampfplasmabrenner 6 über Kühlleitungen 14, 15 mit dem Flüssigkeitsbehälter 13 oder dem Behälter 5 verbunden. Der Kühlkreislauf 11 kann auch direkt über die Flüssigkeitsversorgung des Brenners 6 vom Behälter 5 über die Versorgungsleitung 7 gebildet werden, wodurch nur eine einzige Flüssigkeitsversorgung zum Brenner 6 benötigt wird.

Das Grundgerät 1a kann weiters eine Eingabe- und/oder Anzeigevorrichtung 16 aufweisen, über welche die unterschiedlichsten Parameter bzw. Betriebsarten des Wasserdampf-Schneidgeräts 1 eingestellt und angezeigt werden können. Die über die Eingabe- und/oder Anzeigevorrichtung 16 eingestellten Parameter werden an die Steuervorrichtung 3 weitergeleitet, welche die einzelnen Komponenten des Wasserdampf-Schneidgeräts 1 entsprechend ansteuert.

Der Wasserdampfplasmabrenner bzw. Brenner 6 kann zumindest ein Bedienelement 17, insbesondere einen Taster 18, aufweisen. Über das Bedienelement 17, insbesondere den Taster 18, kann der Benutzer der Steuervorrichtung 3 vom Brenner 6 aus mitteilen, dass ein Wasserdampf-Schneidverfahren gestartet bzw. durchgeführt werden soll. Des Weiteren können an der Eingabe- und/oder Ausgabevorrichtung 16 beispielsweise Voreinstellungen getroffen werden, insbesondere dass das zu schneidende Material oder die verwendete Spannung vordefiniert werden. Selbstverständlich können weitere Bedienelemente am Brenner 6 angeordnet sein, über die ein oder mehrere Betriebsparameter des Wasserdampf-Schneidgeräts 1 vom Brenner 6 aus eingestellt werden können. Hierzu können diese Bedienelemente 17 direkt über Leitungen oder über ein Bussystem mit dem Grundgerät 1a, insbesondere mit der Steuervorrichtung 3, verbunden sein. Das Bedienelement 17 kann auch eine Anzeigevorrichtung, beispielsweise eine LCD-Anzeige, beinhalten, so dass dem Benutzer am Brenner 6 entsprechende Einstellungen, Parameter oder Informationen angezeigt werden können.

Die Steuervorrichtung 3 aktiviert nach dem Betätigen des Tasters 18 die einzelnen für das Wasserdampf-Schneidverfahren benötigten Komponenten. Beispielsweise werden zuerst die Pumpe (nicht dargestellt), das Sperrelement 4 sowie die Stromquelle 2 angesteuert, wodurch eine Versorgung des Brenners 6 mit der Flüssigkeit 8 sowie elektrischer Energie eingeleitet wird. Anschließend aktiviert die Steuervorrichtung 3 den Kühlkreislauf 11, so dass eine Kühlung des Brenners 6 ermöglicht wird. Durch die Versorgung des Brenners 6 mit Flüssigkeit 8 und Energie, insbesondere mit Strom und Spannung, wird im Brenner 6 die Flüssigkeit 8 in ein Gas 19, insbesondere in Plasma mit hoher Temperatur, umgewandelt, so dass mit dem aus dem Brenner 6 ausströmenden Gas 19 bzw. Plasma ein Schneidprozess an einem Werkstück 20 durchgeführt werden kann.

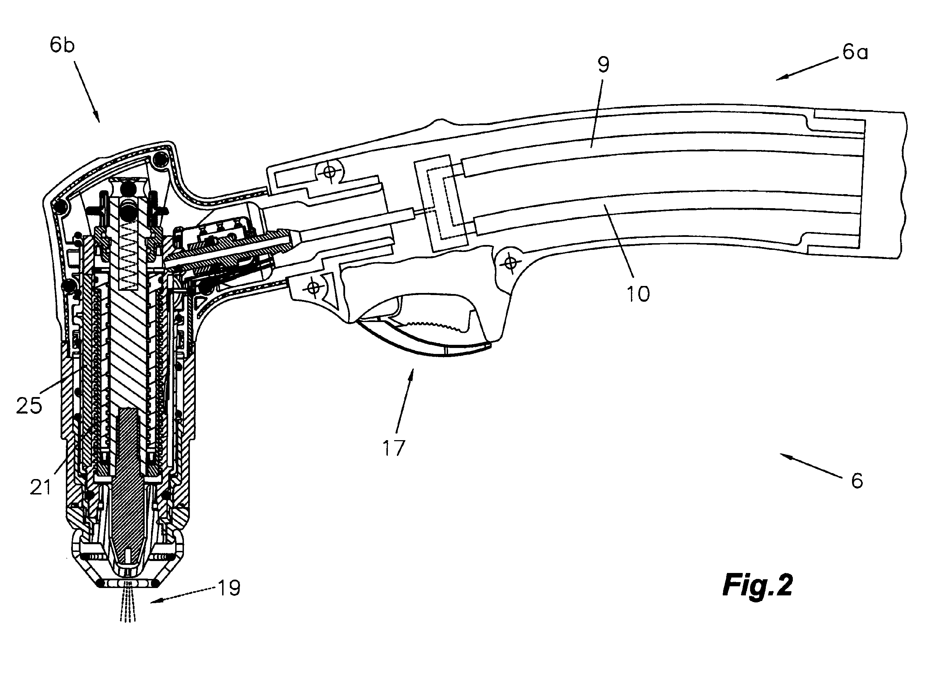

In Fig. 2 ist ein bekannter Wasserdampfplasmabrenner bzw. Brenner 6, wie er beispielsweise in der AT 502 448 B1 beschrieben ist, dargestellt. Bei einem derartigen Brenner 6 wird eine übliche ohmsche Widerstandsheizung mit einem Heizdraht eingesetzt, der jedoch nicht vollständig um einen Verdampfer 21 des Brenners 6 angeordnet ist. Auf den Aufbau des Brenners 6 wird hierbei nicht mehr näher eingegangen, da dieser aus der AT 502 448 B1 bekannt ist.

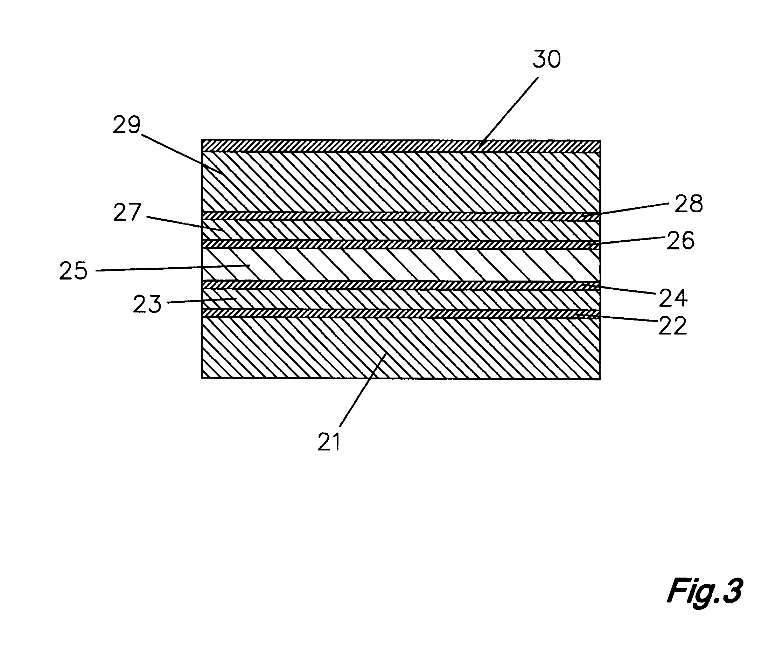

In Fig. 3 ist ein schematischer thermischer Aufbau beim Einsatz eines ohmschen Heizelements 25, wie beim Brenner 6 gemäß Fig. 2, gezeigt.. Dabei schließt an einen Verdampfer 21 des Brenners 6 unter Bildung eines Übergangswiderstand 22 eine Isolierschicht 23 an, an die sich das Heizelement 25, insbesondere das Widerstandselement, unter Bildung eines weiteren Übergangswiderstands 24 anfügt. Zwischen dem Heizelement 25 und einer Isolierschicht 27 wird ein Übergangswiderstand 26 gebildet, wobei unter Bildung eines weiteren Übergangswiderstands 28 eine weitere äußere Isolierschicht 29 mit einer Fixierung 30 angeordnet ist. Das Heizelement 25, insbesondere die aus dem Stand der Technik bekannte Widerstandsheizung, setzt sich also aus den Elementen 22 bis 30 zusammen. Dieser thermische Aufbau entspricht dabei dem Bereich der Heizeinrichtung und dem Kanal gemäß der AT 502 448 B1.

Bei dem aus dem Stand der Technik bekannten Brenner 6 mit dem ohmschen Heizelement 25 findet die Wärmeübertragung wie folgt statt. Die Energie wird im Heizelement 25, insbesondere im Heizdraht, umgesetzt und überträgt sich über einen Wärmeübergangswiderstand $R_{th1}$ des Übergangswiderstands 24 auf das Isoliermaterial 23. Das Isoliermaterial 23 hat einen der Wärmeleitung entsprechenden Wärmeleitwiderstand $P_{th2}$. Vom Isoliermaterial 23 wird die Energie über einen weiteren Wärmeübergangswiderstand $R_{th3}$ des Übergangswiderstands 22, welcher abhängig von der Oberflächenbeschaffenheit und Art der Montage ist, auf den Verdampfer 21 übertragen.

Daraus ergibt sich nun, dass

$$R_{t_{h\ gesamt}} = R_{th1} + R_{th2} + R_{th3}\ [K/W]$$

Je größer $R_{th\ gesamt}$ desto größer ist der Temperaturunterschied zwischen Heizelement 25 und Verdampfer 21.

Durch die Übergangswiderstände 22, 24 kommen sehr große Temperaturunterschiede zwischen dem eigentlichen Heizdraht bzw. dem ohmschen Heizelement 25 und dem Verdampfer 21 zustande. Dadurch bedingt können auch Fehler in der Temperaturmessung auftreten, da der Thermofühler zwischen Verdampfer 21 und Heizelement 25, insbesondere zwischen dem Verdampfer 21 und dem Übergangswider-stand 22, liegt. Außerdem wird das ganze System sehr träge, da sich der Verdampfer 21 verzögert erwärmt, nachdem elektrische Energie im Heizdraht bzw. Heizelement 25 in Wärme umgesetzt worden ist.

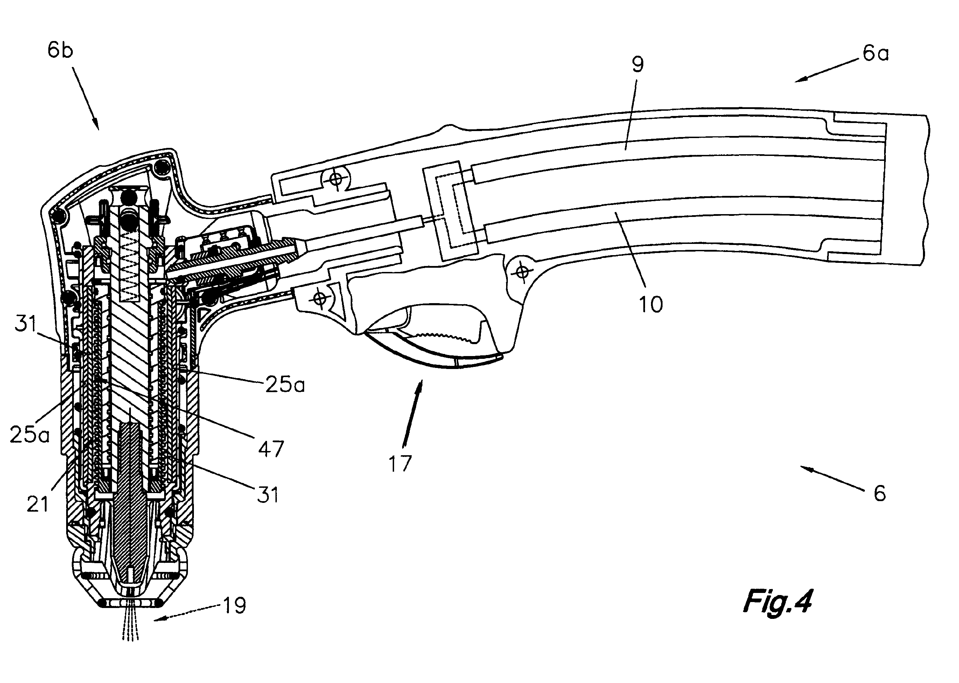

Beim Brenner 6 gemäß den Fig. 4 bis 6 ist erfindungsgemäß vorgesehen, den Wärmeeintrag und die Trägheit des bekannten Systems gemäß den Fig. 2 und 3 zu verbessern und eine verbesserte Verdampfung zu erzielen.

Damit der Wärmeeintrag verbessert werden kann, wurde der Aufbau dahingegen geändert, dass nunmehr anstelle der Beheizung mittels eines ohmschen Widerstandsdrahtes, gemäß Fig. 2 und 3, ein induktives Heizelement, also eine Induktionsheizung 47, welche insbesondere durch eine Spule 25a (schematisch angedeutet) realisiert wird, eingesetzt wird. Beim Umbau ist es erforderlich, dass entsprechende Materialien eingesetzt werden, um eine entsprechende Wärmeleistung zu erreichen. Bei thermisch gut leitenden Materialien, wie Kupfer, Aluminium oder Silber, aus welchen die Verdampfer 21, 40 üblicherweise aufgebaut sind, ist allerdings aufgrund der guten elektrischen Leitfähigkeit und der geringen magnetischen Permeabilität eine sehr hohe Frequenz nötig, um eine geringe Eindringtiefe des Wirbelstroms und somit einen hohen elektrischen Widerstand zu gewährleisten. Außerdem ist ein großer Anteil an Blindleistung aufzubringen, um Wirkleistung im Material umzusetzen. Dies bedeutet einen sehr aufwändigen und kostenintensiven Schaltungsaufbau. Setzt man hingegen ferromagnetische Metalle ein, so ist die Wärmeleitung um Faktoren schlechter.

Erfindungsgemäß ist vorgesehen, dass auf dem Verdampfer 21, welcher aus einem thermisch gut leitenden Material, wie Kupfer, Silber, Aluminium, Aluminiumnitrid, etc., besteht, ein Grundkörper 31 aus ferromagnetischem, elektrisch leitendem Material aufgebracht wird. Das Heizelement 25 ist durch eine Induktionsheizung 47 gebildet, welche derart im Brenner 6 integriert ist, dass diese an einer Hybridkonstruktion des Verdampfers 21 aus thermisch hoch leitfähigem Material mit einem leicht magnetisierbaren Material 35, in dem eine Spule 25a eingebettet ist, angeordnet ist. Somit kann die Frequenz zur Ansteuerung der Induktionsheizung 47 und die aufzubringende Blindleistung signifikant reduziert werden, so dass ein wirtschaftlicher Einsatz möglich ist. Der Wärmeübergangswiderstand zwischen den beiden Materialien kann durch Aufpressen, Galvanisieren, Microschmieden, Aufschrumpfen, thermisches Beschichten usw. sehr gering gehalten werden.

Die Ansteuerung der Stromquelle 2 (nicht dargestellt), insbesondere des Leistungsteils, für die Induktionsheizung 47 erfolgt im sogenannten "Current-mode", wie aus dem Stand der Technik bekannt, mit einer Vollbrücke, welche frequenzvariabel arbeitet. Bei fixen Frequenzen ändert sich die übertragene Leistung in Abhängigkeit der Temperatur, weil sich der Leitwert und somit die Eindringtiefe ändert. Im Current-mode steigt der Strom annähernd linear an, bis er einen eingestellten Schwellwert erreicht, dann schaltet eine Seite der Halbbrücke ab. Da sich die Streuinduktivität der Heizung erst entladen muss, wird der Strom noch einige Zeit in die gleiche Richtung fließen. Jedoch wird der Strom durch die Spule in diesem Moment wieder in den Zwischenkreis zurück gespeist. Die Polarität an der Spule ändert sich und die andere Seite der Halbbrücke kann nun spannungsfrei und somit verlustfrei eingeschaltet werden.

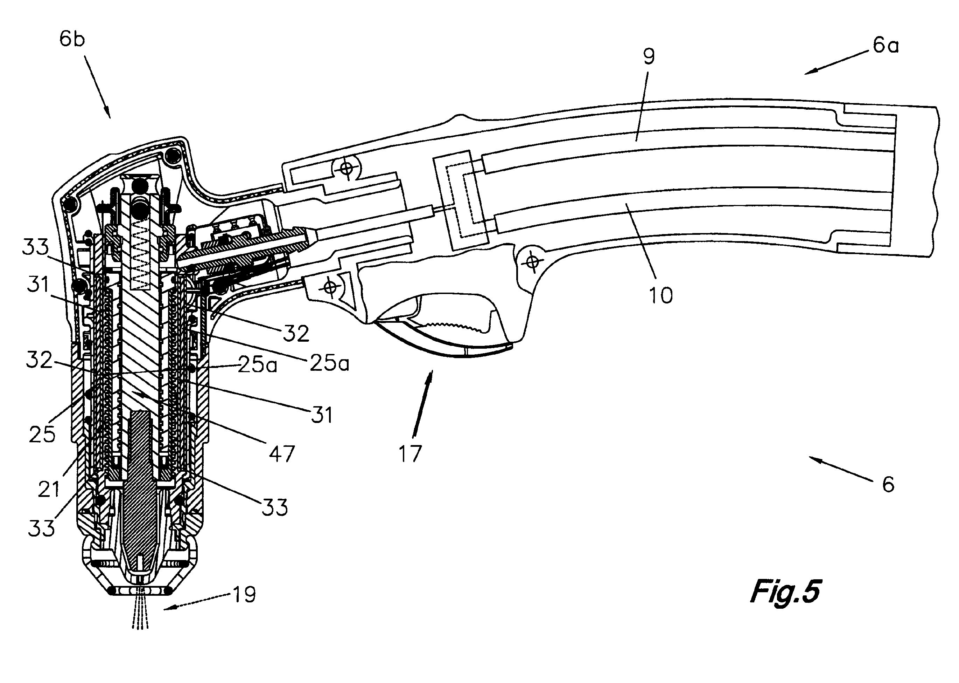

Fig. 5 zeigt ein weiteres Ausführungsbeispiel eines Brenners 6 mit einer Verbesserung der Wärmeeinbringung und Reduzierung der Blindleistung. Damit wird ein sehr guter Leistungsfaktor von Blindleistung zur Scheinleistung und eine noch weitere Reduzierung der Frequenz durch eine weitere Optimierung des magnetischen Kreises erreicht.Hierzu wird der Hybridaufbau des Verdampfers 21 derart erweitert, dass die Spule 25a der Induktionsheizung 47 in einem Grundkörper 31 und einem Abdeckelement 32 aus ferromagnetischen hochpermeablen Materialien eingebettet wird. Dabei ist darauf zu achten, dass das obere ferromagnetische hochpermeable Material, also jene dem Verdampfer 21 abgewandte Seite, in Wirbelstromflussrichtung isolierend aufgebaut ist, ansonsten treten hier auch große Wirbelstromverluste auf. Bei der Auswahl des Materials ist darauf zu achten, dass die Ummagnetisierungsverluste gering sind. Hier eignen sich besonders weichmagnetische Materialien, wie Ferrite, amorphe oder nanokristalline Materialien. Letztere eignen sich besonders aufgrund der hohen Curie-Temperatur.

Zur Erzielung einer weiteren Verbesserung wurde der magnetische Kreis geschlossen, indem die Konstruktion um seitlich angeordnete Stege 33 erweitert wurde.Damit ein einfacher kostengünstiger Aufbau möglich ist, wurde das dem Verdampfer 21 abgewandte hochpermeable Abdeckelement 32 nicht in den Stegen 33 eingeschlossen, sondern auf den Stegen 33 aufgelegt, wozu eine stufenförmige Ausbildung der Stege 33 geschaffen wurde. Die Hybridkonstruktion der Induktionsheizung 47 besteht also aus einem Grundkörper 31 mit sich seitlich erstreckenden Stegen 33, innerhalb welcher die Spule 25a angeordnet ist, und abschließend einem Abdeckelement 32.

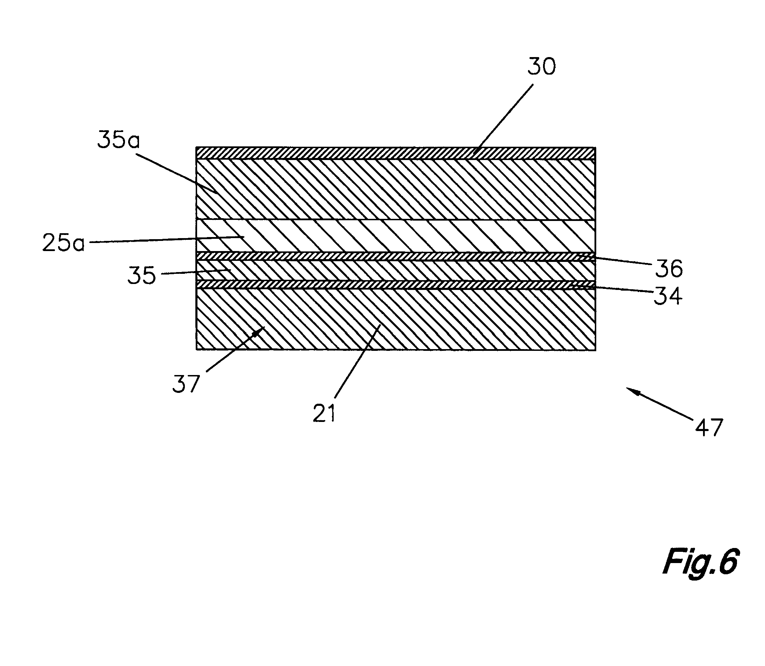

In Fig. 6 ist nunmehr der thermische Aufbau mit einer Induktionsheizung 47 im Vergleich zur Widerstandsheizung des Standes der Technik gemäß Fig. 3 dargestellt.

Dabei ist ein Verdampfer 21, ein Wärmeübergangswiderstand 34 zwischen Verdampfer 21 und leicht magnetisierbarem bzw. ferromagnetischem Material 35, das leicht magnetisierbare Material 35, ein Wirbelstrom 36 im leicht magnetisierbaren, ferromagnetischen Material 35, die Spule 25a, insbesondere ein Lackdraht, ein thermisch hoch leitfähiges bzw. hochpermeables Material 37 zur Optimierung des magnetischen Kreises und eine Fixierung 30 gezeigt.

Die Wärmeübertragung findet wie folgt statt: Im leicht magnetisierbaren Material 35 (Eisen, Edelstahl, Nickel, Kobalt oder deren Legierungen) wird durch induktive Kopplung von der Spule 25a ein Wirbelstrom 36 induziert. Dieser dringt in Abhängigkeit von der Frequenz und den Materialeigenschaften in das leicht magnetisierbare Material 35 ein. In Abhängigkeit der Eindringtiefe wird die Geometrie für den Stromfluss und somit der elektrische Widerstand vorgegeben, wodurch in der Schicht, in der der induzierte Strom fließt, Wärme erzeugt wird. Diese Wärme fließt über den Wärmeleitwiderstand, insbesondere das leicht magnetisierbare Material 35, und über den Wärmeübergangswiderstand 34 zum Verdampfer 21.

Bei dieser Konstruktion können beispielsweise mittels induktiver Beheizung des Verdampfers 21 Leistungen von 500W bei einer Fläche von 9,7 cm$^2$ übertragen werden, bei einer Temperaturdifferenz <5K. Dies entspricht einem Wärmeübergangskoeffizenten von 103kW/ (m$^2$*K). Damit wird eine Verbesserung gegenüber der ohmschen Beheizung um einen Faktor von ca. 300 erreicht.

Aufgrund der Optimierung des magnetischen Kreises und der Auswahl der richtigen Materialien kann die Steuerung einfacher ausfallen als bei bekannten Induktionsheizungen, was natürlich einen großen Kostenvorteil mit sich bringt. So kann man die Induktionsheizung 47 mit einer konventionellen H-Brücke mit fixer Frequenz betreiben. Vorteilhaft bei dieser Art der Ansteuerung ist, dass die Leistung über Pulsweitenmodulation geregelt werden kann. Durch Parallelschalten von Kondensatoren zu den Transistoren und geeignete Ansteuerung kann der Leistungsteil über Phase Shifting geregelt werden. Dabei können die Transistoren nahezu verlustfrei geschaltet werden. Nachteilig ist allerdings, dass sich die übertragbare Leistung mit der Temperatur des ferromagnetischen Metalls ändert, da sich hier auch der elektrische Leitwert und somit die Eindringtiefe ändert. Somit erfolgen unterschiedliche Leistungsübertragungen bei der selben Ansteuerung im kalten und im warmen Zustand. Dieser Umstand ist häufig unerwünscht. In gewissem Maße kann Abhilfe geschaffen werden, indem die Frequenz variabel gewählt und die Schaltung zum Ansteuern der Induktionsheizung 47 im Current-mode betrieben wird. Dabei sind immer zwei Transistoren so lange eingeschaltet, bis ein gewisser Stromwert durch die Heizung erreicht ist. Danach werden diese Transistoren ausgeschaltet, und die anderen zwei Transistoren werden eingeschaltet, bis der Strom erreicht ist. Vorteilhaft bei dieser Art der Ansteuerung ist, neben der in einem gewissen Bereich gehaltenen Leistungsübertragung, dass die Halbwellen immer gleich lang und synchron sind und somit bei der positiven und auch der negativen Halbwelle dieselbe Leistung übertragen wird. Dies hat insbesondere den Vorteil, dass sich der Wechselspannung keine Gleichspannung überlagern kann und somit die Magnetmaterialien nicht in Sättigung gehen. Vorteilhaft ist außerdem, dass die gewünschte Leistung mit entsprechendem Setzen des Stromschwellwertes beliebig eingestellt werden kann. Durch Parallelschalten von Kondensatoren zu den Transistoren können auch hier die Schaltverluste minimiert werden.

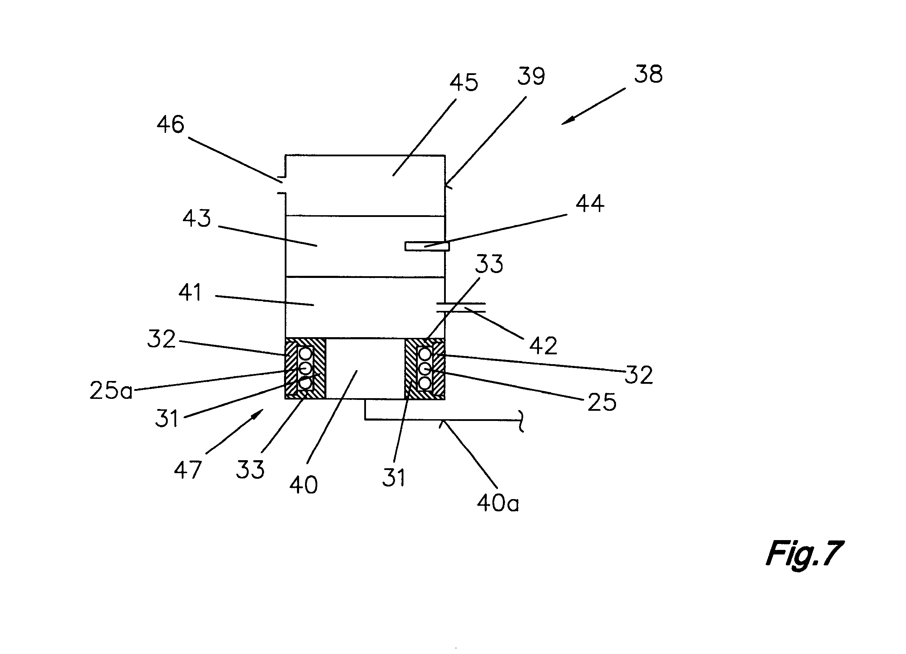

Beispielsweise ist auch der Einsatz der erfindungsgemäßen Induktionsheizung 47 in einem Thermogenerator, insbesondere einem DC-DC-Generator, möglich, der beispielsweise in der WO2010/078606 A2 beschrieben ist. Hierzu wird ein weiteres Ausführungsbeispiel in Fig. 7 beschrieben, bei dem es sich um einen Brenner 38 einer Stromerzeugungsvorrichtung einer Ladevorrichtung mit einem Heizelement 25 handelt. Das Brennergehäuse 39 weist mehrere, übereinander angeordnete Bereiche auf. Der unterste Bereich wird durch einen Verdampfer 40 gebildet, in welchem ein Füllkörper angeordnet sein kann. Der Verdampfer 40 weist einen Anschluss für eine Zuleitung 40a eines nicht dargestellten Flüssigkeitssystems für den Brennstoff auf. Über dem Verdampfer 40 befindet sich ein Mischbereich 41, an welchem ein Luftzufuhrrohr 42 angeschlossen ist, so dass ein Brennstoffgemisch gebildet werden kann. Zwischen dem Verdampfer 40 und dem Mischbereich 41 kann eine Düse angeordnet sein. Oberhalb des Mischbereichs 41 befindet sich der Brennraum 43, in welchem das Brennstoffgemisch verbrannt wird und bevorzugt die Zündvorrichtung 44 integriert ist. Als Übergang vom Mischbereich 41 zum Brennraum 43 ist bevorzugt ein Sieb angeordnet. Über den Abgasraum 45 und eine Abgasöffnung 46 gelangen die Abgase vom Brennergehäuse ins Freie bzw. nach außen.

Das Brennergehäuse 39 besteht im Wesentlichen aus zwei Körpern, welche allerdings bevorzugt aus einem Teil gefertigt sind. Dabei sind beide Körper zylindrisch ausgebildet, wobei ein Körper durch den Verdampfer 40 gebildet ist und der weitere Körper die darüber liegenden Bereiche enthält und die äußere Form des Brennergehäuses 38 darstellt. Der Verdampfer 40 ist mit einem Heizelement 25 verbunden, welches bevorzugt um den Verdampfer 40 angeordnet ist. Somit ist die äußere Form des Heizelements 25 an die äußere Form des Brennergehäuses 39 angepasst. Ebenso bilden das Heizelement 25 und der Verdampfer 40 im Wesentlichen eine Einheit. Das Heizelement 25 kann auch im Verdampfer 40 bzw. im Brennergehäuse 39 integriert sein. Dadurch wird ein äußerst kompakter Aufbau des Brenners 38 möglich.

Erfindungsgemäß wird nunmehr das Heizelement 25 für den Brenner durch eine Induktionsheizung 47 gebildet, die den Verdampfer 40 umschließt. Das Induktionsheizelement 47 ist in einer Hybridkonstruktion eingebettet und eine Spule 25a ist von der Hybridkonstruktion mit einem leicht magnetisierbaren Material 35 umschlossen, welches an einem thermisch hoch leitfähigen Material 37 des Verdampfers 40 anliegt. Der Aufbau der Induktionsheizung 47 des Brenners 38 gemäß Fig. 7 gleicht bzw. ist identisch mit jenem der Induktionsheizung 47 des Wasserdampf-Schneidgeräts 1 der Fig. 4 bis 6.

Im Gehäuse des Brenners 38 kann der Hybridaufbau der Induktionsheizung 47 integriert sein oder, wie dargestellt, als eigenständiges ringförmiges Bauteil aufgebaut sein, welches anschließend auf den Brenner 38 aufgesteckt wird, so dass es den Verdampfer 40 umschließt. Durch Aktivierung der Induktionsheizung 47 wird der Brenner 38, insbesondere der Bereich des Verdampfers 40, erwärmt, so dass das zugeführte Brennstoffgemisch erwärmt und verdampft wird. Bevorzugt wird die Induktionsheizung 47 lediglich in der Startphase eingesetzt und anschließend deaktiviert, um möglichst wenig Energie zu verbrauchen und somit den Wirkungsgrad des DC-DC-Generators zu erhöhen. Dazu ist der Brenner 38 derart ausgebildet, dass es aufgrund des Temperaturhaushaltes des Brenners 38 zu einer Eigenverdampfung des Brennstoffgemisches kommt und somit die Induktionsheizung 47 nach einer bestimmten Betriebsdauer nicht mehr benötigt wird. Wird jedoch aufgrund sehr niedriger Außentemperaturen eine zusätzliche Heizung für den Brenner 38 benötigt, kann auch während des Betriebes die Induktionsheizung 47 dazugeschaltet werden.

Das Heizelement 25 kann also für zu verdampfende Flüssigkeiten, beispielsweise für einen Brenner 6 eines Wasserdampf-Schneidgeräts 1 oder einen Brenner 38 einer Stromerzeugungsvorrichtung, eingesetzt werden und ist als Induktionsheizung 47 ausgebildet, welche in einer Hybridkonstruktion eingebettet ist. Eine Spule 25a ist von der Hybridkonstruktion mit einem leicht magnetisierbaren Material 35 umschlossen, welches zur Anlage an einem thermisch hoch leitfähigen Material 37 eines Verdampfers 21, 40 ausgebildet ist. Bevorzugt wird das Heizelement 25 eigenständig ausgebildet. Dabei besteht die Hybridkonstruktion der Induktionsheizung 47 aus einem Grundkörper 31 mit seitlich erstreckenden Stegen 33, innerhalb welcher die Spule 25a angeordnet ist und auf denen abschließend ein Abdeckelement 32 angeordnet ist. Bevorzugt wird das leicht magnetisierbare Material 35 des Hybridaufbaus, also des Grundkörpers 31, auf das thermisch hoch leitfähige Material 37 des Verdampfers 21, 40 aufgepresst, so dass ein durch einen Luftspalt resultierender Übergangswiderstand vermieden werden kann.

**Patentansprüche**

1. Heizelement (25) für zu verdampfende Flüssigkeiten, beispielsweise für einen Brenner (6) eines Wasserdampf-Schneidgeräts (1) oder einen Brenner (38) einer Stromerzeugungsvorrichtung, welches als Induktionsheizung (47) mit einer Spule (25a) ausgebildet ist, **dadurch gekennzeichnet, dass** die Spule (25a) der Induktionsheizung (47) in einer aus einem Grundkörper (31) mit seitlich erstreckenden Stegen (33) bestehenden Hybridkonstruktion aus einem leicht magnetisierbaren Material (35) und einem thermisch hoch leitfähigen Material umschlossen ist, wobei auf den Stegen (33) ein Abdeckelement (32) aus nanokristallinen Materialien angeordnet ist, und das leicht magnetisierbare Material (35) zur Anlage an einem thermisch hoch leitfähigen Material (37) eines Verdampfers (21) ausgebildet ist.

2. Heizelement (25) nach Anspruch 1, **dadurch gekennzeichnet, dass** das leicht magnetisierbare Material (35) aus Eisen oder ferritischem Edelstahl gebildet ist.

3. Heizelement (25) nach Anspruch 1 oder 2, **dadurch gekennzeichnet, dass** das thermisch hoch leitfähige Material (37) aus Kupfer, Aluminium oder Silber gebildet ist.

4. Heizelement (25) nach einem der Ansprüche 1 bis 3, **dadurch gekennzeichnet, dass** das leicht magnetisierbare Material (35) des Hybridaufbaus auf das thermisch hoch leitfähige Material (37) des Verdampfers (21) aufgepresst ist.

5. Heizelement (25) nach einem der Ansprüche 1 bis 4, **dadurch gekennzeichnet, dass** das leicht magnetisierbare Material (35) die Spule (25a) allseitig umschließt.

6. Heizelement (25) nach einem der Ansprüche 1 bis 5, **dadurch gekennzeichnet, dass** zum Ansteuern der Induktionsheizung (47) eine im Current-mode betriebene Schaltung vorgesehen ist.

7. Heizelement (25) nach Anspruch 6, **dadurch gekennzeichnet, dass** die Schaltung Transistoren enthält, wobei immer zwei Transistoren so lange eingeschaltet sind, bis ein gewisser Stromwert durch die Heizung erreicht ist.

8. Wasserdampf-Schneidgerät (1), mit einem Brenner (6), einer Steuervorrichtung (3), einem Flüssigkeitsversorgung und einer Stromquelle (2), wobei der Brenner (6) über Leitungen (9, 10) mit der Stromquelle (2) und über eine Versorgungsleitung (7) mit der Flüssigkeitsversorgung verbunden ist, und im Brenner (6) zumindest ein Kanal zur Umwandlung einer Flüssigkeit in ein Gas ausgebildet ist, wobei der Brenner (6) zumindest eine Kathode und eine Anode umfasst, zwischen denen ein Verdampfer (21) ausgebildet ist, und die Flüssigkeitsversorgung über eine Leitung mit einem Zwischenraum zwischen Kathode und der Anode über den Kanal verbunden ist, **dadurch gekennzeichnet, dass** weiters im Brenner (6) ein Heizelement (25) nach einem der Ansprüche 1 bis 7, angeordnet ist, das dem Kanal zum Verdampfen der Flüssigkeit zugeordnet ist.

**9.** Brenner (38) einer Stromerzeugungsvorrichtung einer Ladevorrichtung mit einem Heizelement (25), welches in einem Brennergehäuse (39) angeordnet ist, wobei eine Verbindung mit einem Verdampfer (40) des Brenners (38) vorgesehen ist, und die äußere Form des Heizelements (25) an die äußere Form des Brennergehäuses (39) angepasst ist, wobei der Verdampfer (40) mit einer Flüssigkeitsversorgung zum Zuführen von Treibstoff verbunden ist, **dadurch gekennzeichnet, dass** das Heizelement (25) durch eine Induktionsheizung (47) nach einem der Ansprüche 1 bis 7, ausgebildet ist,

**Claims**

**1.** A heating element (25) for liquids to be vaporised, for instance for a burner (6) of a steam cutting device (1) or a burner (38) of a power-generating device, said element being designed as an induction heater (47) having a coil (25a), **characterized in that** the coil (25a) of the induction heater (47) is enclosed in a hybrid construction which is composed of a main part (31) with laterally extending webs (33) and consists of an easily magnetisable material (35) and a thermally highly-conductive material, a covering element (32) consisting of nanocrystalline materials being arranged on said webs (33), and the easily magnetisable material (35) being designed to adjoin a thermally highly-conductive material (37) of a vaporiser (21).

**2.** The heating element (25) according to claim 1, **characterized in that** the easily magnetisable material (35) is made of iron or ferritic high-grade steel.

**3.** The heating element (25) according to claim 1 or 2, **characterized in that** the thermally highly-conductive material (37) is made of copper, aluminium or silver.

**4.** The heating element (25) according to any of claims 1 to 3, **characterized in that** the easily magnetisable material (35) of the hybrid construction is pressed onto the thermally highly-conductive material (37) of the vaporiser (21).

**5.** The heating element (25) according to any of claims 1 to 4, **characterized in that** the easily magnetisable material (35) encloses the coil (25a) on all sides.

**6.** The heating element (25) according to any of claims 1 to 5, **characterized in that** a current mode operated circuit is provided for triggering the induction heater (47).

**7.** The heating element (25) according to claim 6, **characterized in that** the circuit comprises transistors, whereby always two transistors are being switched on until a certain current value has been reached by the heating.

**8.** A steam cutting device (1), comprising a burner (6), a control device (3), a liquid supply and a power source (2), the burner (6) being connected to the power source (2) via lines (9, 10) and to the liquid supply via a supply line (7), and in the burner (6) at least one channel being present for converting a liquid into a gas, whereby the burner (6) comprises at least one cathode and one anode, between which a vaporiser (21) is formed, and the liquid supply being connected to an intermediate space between the cathode and the anode through the channel via a line, **characterized in that** furthermore a heating element (25) according to any of claims 1 to 7 is arranged in the burner (6), which element is allocated to the channel for vaporisation of the liquid.

**9.** A burner (38) of a power-generating device of a charger comprising a heating element (25) which is arranged in a burner housing (39), whereby a connection to a vaporiser (40) of the burner (38) is provided, and the outer shape of the heating element (25) is adapted to the outer shape of the burner housing (39), whereby the vaporiser (40) is connected to a liquid supply for the supply of fuel, **characterized in that** the heating element (25) is formed by an induction heater (47) according to any of claims 1 to 7.

**Revendications**

**1.** Élément chauffant (25) pour l'évaporation de liquides, par exemple, pour un brûleur (6) d'un appareil de coupe à vapeur d'eau (1) ou un brûleur (38) d'un dispositif de production de courant, ledit élément étant conçu sous la forme d'un chauffage à induction (47) muni d'une bobine (25a), **caractérisé en ce que** la bobine (25a) du chauffage à induction (47) est enfermée dans une structure hybride qui est composée d'un corps de base (31) muni d'éléments de liaison (33) s'étendant latéralement et constituée d'un matériau légèrement magnétisable (35) et d'un matériau hautement thermoconducteur, un élément de recouvrement (32) constitué de matériaux nanocristallins étant agencé sur lesdits éléments de liaison (33), et le matériau légèrement magnétisable (35) étant conçu pour venir en contact avec un matériau hautement thermoconducteur (37) d'un évaporateur (21).

**2.** Élément chauffant (25) selon la revendication 1, **caractérisé en ce que** le matériau hautement magnétisable (35) est fait de fer ou d'acier ferritique de haute qualité.

**3.** Élément chauffant (25) selon la revendication 1 ou 2, **caractérisé en ce que** le matériau hautement thermoconducteur (37) est fait de cuivre, d'aluminium ou d'argent.

**4.** Élément chauffant (25) selon l'une quelconque des revendications 1 à 3, **caractérisé en ce que** le matériau légèrement magnétisable (35) de la structure hybride est ajusté par pression sur le matériau hautement thermoconducteur (37) de l'évaporateur (21).

**5.** Élément chauffant (25) selon l'une quelconque des revendications 1 à 4, **caractérisé en ce que** le matériau légèrement magnétisable (35) entoure la bobine (25a) de tous les côtés.

**6.** Élément chauffant (25) selon l'une quelconque des revendications 1 à 5, **caractérisé en ce qu'**un circuit alimenté en mode courant est prévu pour déclencher le chauffage à induction (47).

**7.** Élément chauffant (25) selon la revendication 6, **caractérisé en ce que** le circuit comprend des transistors, deux transistors étant toujours activés jusqu'à ce qu'une certaine valeur de courant soit atteinte par le chauffage.

**8.** Appareil de coupe à vapeur d'eau (1), comprenant un brûleur (6), un dispositif de commande (3), une alimentation de liquide et une source de courant (2), le brûleur (6) étant relié à la source d'alimentation en énergie (2) par des lignes (9, 10) et à l'alimentation en liquide par une ligne d'alimentation (7), et dans le brûleur (6) au moins un canal étant présent pour convertir un liquide en un gaz, le brûleur (6) comprenant au moins une cathode et une anode, entre lesquelles un évaporateur (21) est formé, et l'alimentation en liquide par une ligne étant reliée à un espace intermédiaire entre la cathode et l'anode à travers le canal, **caractérisé en ce qu'**il est en outre agencé dans le brûleur (6) un élément chauffant (25) selon l'une quelconque des revendications 1 à 7 qui est associé au canal pour vaporiser le liquide.

**9.** Brûleur (38) d'un dispositif de production de courant d'un chargeur comprenant un élément chauffant (25) qui est agencé dans un carter de brûleur (39), une liaison avec un évaporateur (40) du brûleur (38) étant assurée, et la forme extérieure de l'élément chauffant (25) étant adaptée à la forme extérieure du carter de brûleur (39), l'évaporateur (40) étant relié à une alimentation en liquide pour l'apport de combustible, **caractérisé en ce que** l'élément chauffant (25) est formé par un chauffage à induction (47) selon l'une quelconque des revendications 1 à 7.

**Fig.1**

6a

9

6

10

17

19

6b

25

21

*Fig.2*

Fig.3

6b

6a

9

10

31

25a

25a

47

31

21

17

19

*Fig.4*

EP 2 659 748 B1

13

Fig.5

*Fig.6*

EP 2 659 748 B1

*Fig.7*

EP 2 659 748 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1050200 B1
- AT 502448 B1
- US 7180264 B2
- WO 2010078606 A2
- JP 2001230064 A
- JP 2001188428 A
- JP 2000039786 A